Europäisches Patentamt

European Patent Office

Office européen des brevets

(11) Numéro de publication: **0 291 402 B1**

(12) **FASCICULE DE BREVET EUROPEEN**

(45) Date de publication de fascicule du brevet: **19.08.92**  (51) Int. Cl.⁵: **G09B  27/00**

(21) Numéro de dépôt: **88401134.7**

(22) Date de dépôt: **10.05.88**

(54) **Appareil de réproduction de la vision apparente des astres.**

(30) Priorité: **12.05.87 FR 8706669**

(43) Date de publication de la demande:
**17.11.88 Bulletin  88/46**

(45) Mention de la délivrance du brevet:
**19.08.92 Bulletin  92/34**

(84) Etats contractants désignés:
**DE FR**

(56) Documents cités:
**CH-A- 146 583       DE-B- 1 236 838**
**DE-C- 194 420       DE-C- 570 089**
**FR-A- 2 152 416      US-A- 3 527 046**

(73) Titulaire: **SCULPTURES JEUX S.A.**
**18, rue Domat**
**F-75005 Paris(FR)**

(72) Inventeur: **Vuarnesson, Bernard**
**1, Boulevard Saint-Michel**
**F-75005 Paris(FR)**

(74) Mandataire: **Schrimpf, Robert et al**
**Cabinet Regimbeau 26, Avenue Kléber**
**F-75116 Paris(FR)**

# Description

La présente invention concerne les instruments de reproduction de la vision apparente d'un astre.

Les instruments connus de représentation d'un astre ou de la voute céleste, à un instant donné et en un lieu donné, fournissent une représentation sensiblement différente de ce que donne la vision réelle.

Par exemple, les systèmes connus de représentation des phases de la lune sur les montres ou les pendules sont constitués d'un disque mobile contenant deux images de la lune disparaissant successivement derrière un cache plan en double demi-cercle qui restitue très imparfaitement la surface du disque lunaire visible à chaque "âge" de la lune. Ces sytèmes anciens font apparaître en particulier les premier et dernier quartiers comme des croissants et non comme des demi-cercles parfaits tels qu'on peut les observer dans la réalité.

De même, les sytèmes portatifs connus de représentation des étoiles visibles à un instant donné, constitués d'une carte rotative occultée en partie par un cache plan dont la forme d'ouverture est variable selon la latitude d'observation, ne sont pas utilisables en un lieu quelconque de la terre et, en raison même de la représentation de la voute céleste sous forme de planisphère, donnent une image fausse de la réalité.

On Connaît d'autre part (document FR-A-2 152 416) un appareil pour reproduire l'éclairage de la terre, cet appareil comprenant une sphère représentative de la terre et un cache, ladite sphère étant mobile à rotation autour d'un axe qui s'étend suivant un diamètre de la sphère et ledit cache présentant une paroi opaque disposée autour d'une source de lumière de façon à provoquer une ligne d'ombre sèparant la sphère en deux parties ègales.

Un but de l'invention est de fournir un appareil permettant de restituer de façon améliorée, à l'échelle choisie, la vision d'un astre et, notamment, la forme et la surface réellement observables du disque lunaire à tous les âges, quel que soit le lieu d'observation.

Un autre but de l'invention est de fournir un appareil permettant de restituer de façon améliorée, à l'échelle choisie, la vision de l'univers céleste dans son ensemble, quel que soit le lieu d'observation.

On y parvient, selon l'invention, par le fait que l'appareil, que comprend une pièce représentative dudit astre et un cache comportant une paroi opaque, est tel que le cache prèsente une ouverture ayant au moins approximativement la forme d'un cercle et que la pièce a au moins approximativement la forme d'un disque ou d'une sphère apte à remplir ladite ouverture et centrée sur le centre de ladite ouverture, au moins la pièce ou le cache étant mobile à rotation autour d'un axe qui passe par le centre de l'ouverture et qui s'étend suivant un diamètre de la pièce.

Par l'expression "ayant au moins approximativement" la forme d'un cercle (ou d'un disque, ou d'une sphère, ou d'une hémisphère), on veut signifier dans la présente description et dans les revendications que la forme est de préférence la forme géométrique désignée mais peut aussi être une forme géométrique approchée, par exemple le contour circulaire peut être remplacé par un contour polygonal, de préférence un polygone ayant un grand nombre de côtés, ou par un contour courbe n'ayant qu'approximativement la forme circulaire, par exemple un contour constitué d'une suite de portions courbes, etc. La sphère peut être remplacée par un polyèdre, etc.

La paroi opaque du cache a, de préférence, une forme au moins approximativement hémisphérique, mais elle peut avoir d'autres formes, notamment une forme tubulaire, de préférence cylindrique, ou une forme plane.

On décrira ci-après différentes réalisations de l'appareil de l'invention, en référence aux figures du dessin joint sur lequel :

- la figure 1 est une perspective schématique d'une réalisation qui convient particulièrement pour restituer la vision de la lune ;
- la figure 2 est un schéma de l'appareil de la figure 1 reproduisant les phases de la lune ;
- la figure 3 est une perspective d'une variante de réalisation de l'appareil de l'invention qui convient particulièrement pour restituer la vision de la sphère céleste ;
- la figure 4 est une coupe d'une variante de réalisation de l'appareil de la figure 3.

La description et les figures font apparaître d'autres particularités avantageuses de l'appareil de la présente invention.

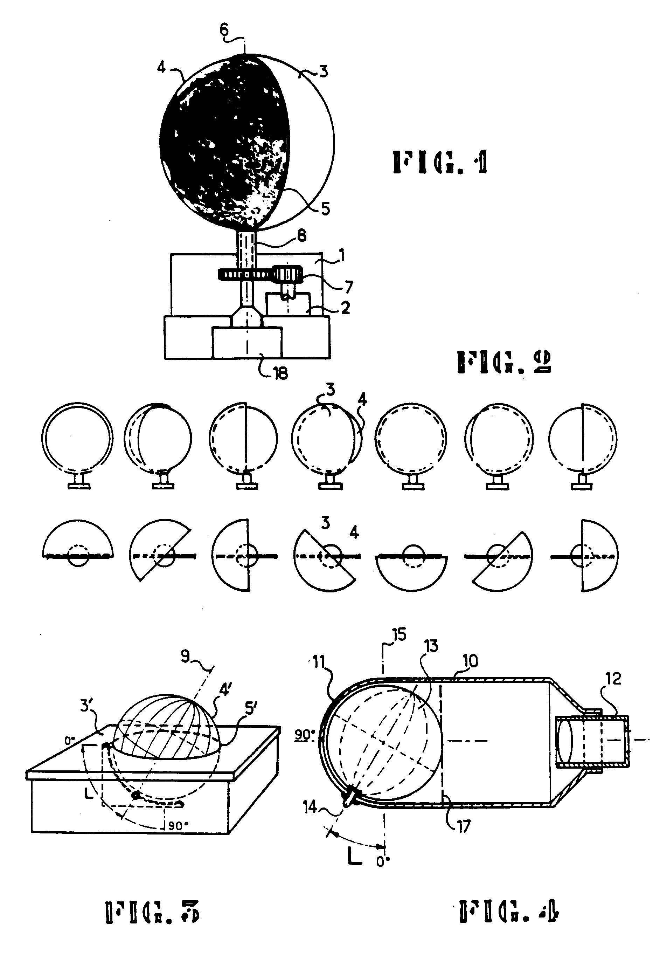

Dans la réalisation représentée sur la figure 1, l'appareil comporte un socle à poser 1 qui porte un cache creux hémisphérique 3 et un disque 4 dont la surface est couverte par la représentation du disque lunaire. Le cercle de base 5 du cache 3 constitue une ouverture circulaire qui est verticale lorsque l'appareil est posé. Le cache est mobile à rotation autour d'un axe 6 disposé selon le diamètre vertical de l'ouverture 5. Cette rotation est commandée manuellement ou de préférence par un mécanisme logé dans le socle et relié au cache par un arbre 8 qui sort du socle vers le haut. Sur la figure 1, le mécanisme est schématisé par un moteur 2 et une transmission 7. Le disque 4 est vertical et son diamètre vertical est confondu avec celui de l'ouverture 5.

Le mécanisme d'entraînement est conçu pour faire tourner le cache à la vitesse d'un tour en 29,5 jours.

Pour mieux restituer les reliefs de la lune, on peut remplacer le disque 4 par une sphère sur laquelle on a représenté une photo, une carte ou un relief de la lune, éventuellement une sphère transparente ou translucide éclairée de l'intérieur. La sphère peut également être constituée par une paroi gonflable.

Lorsque la réalisation comporte un socle, ce socle peut contenir le mécanisme d'une horloge lunaire, ce que l'on a schématisé sous la référence 18 sur la figure 1.

La figure 2 montre, en élévation (rangée du dessus) et en plan (rangée du dessous), l'appareil en service donnant la représentation des phases successives de la lune.

Le même appareil, avec les adaptations adéquates, peut servir pour représenter la vision ou le mouvement apparent d'un autre astre ou planète.

La figure 3 illustre une variante de réalisation dans laquelle le cache 3′ est hémisphérique ou parallélépipédique mais a son ouverture circulaire 5′ qui est horizontale lorsque l'appareil est posé.

La pièce est une sphère 4′ concentrique au cache et qui tourne à rotation dans le cache autour d'un axe 9, lequel traverse le plan de l'ouverture 5′ en faisant avec lui un angle L correspondant à la latitude d'un lieu d'observation. La surface visible de la pièce 4′ représente la voute céleste.

En faisant tourner la sphère céleste préalablement orientée (axe Nord vers le haut pour observation du ciel dans l'hémisphère terrestre Nord, ou axe Sud vers le haut pour observations dans l'hémisphère Sud) à la vitesse d'un tour par jour, on fait apparaître successivement toutes les étoiles visibles et seulement les étoiles visibles à chaque instant de n'importe quel lieu d'observation terrestre.

La figure 4 représente un appareil de type lunette, dont le cache est un tube 10, de préférence cylindrique, fermé à une extrémité par une paroi hémisphérique 11. L'ouverture du cache est située dans le plan 15 d'une section droite du tube. Dans le cas représenté, l'ouverture est constituée par une section d'extrémité du tube. Le tube est muni à son autre extrémité d'un moyen d'observation, de l'intérieur du tube, par exemple un oculaire 12. La pièce 13 est concentrique à l'ouverture du cache et est montée à rotation autour d'un axe 14 en faisant un angle L avec le plan.

La pièce 13 est, par exemple, un disque ou une sphère qui porte une représentation de la lune ou une sphère qui porte une représentation de la voute céleste. Selon les cas, l'axe 14 est situé dans le plan 15 ou est oblique par rapport à ce plan suivant un angle L (cas représenté). La pièce 13, notamment dans le cas d'une sphère, peut être une pièce gonflable et ladite paroi tubulaire comporte alors un écran transversal 17 contre lequel ladite pièce peut s'aplatir plus ou moins lorsqu'elle est gonflée.

A plus grande échelle, le dispositif de l'invention peut être utilisé dans un planétarium pour observer l'évolution des phases de la lune ou des autres planètes du système solaire qui subissent les mêmes phénomènes d'éclairage que notre satellite naturel ou encore pour découvrir le mouvement apparent de la voute céleste.

## Revendications

1. Appareil pour reproduire la vision ou le mouvement apparent d'au moins un astre, cet appareil comprenant une pièce (4 ; 4' ; 13) représentative dudit astre et un cache (3 ; 3' ; 10) comportant une paroi opaque, caractérisé en ce que ladite paroi opaque présente une ouverture (5 ; 5') ayant au moins approximativement la forme d'un cercle et en ce que la pièce a au moins approximativement la forme d'un disque ou d'une sphère apte à remplir ladite ouverture et centrée sur le centre de ladite ouverture, au moins la pièce ou le cache étant mobile à rotation autour d'un axe (6 ; 9; 14)qui passe par le centre de l'ouverture et qui s'étend suivant un diamètre de la pièce.

2. Appareil selon la revendication 1, dans lequel la paroi opaque du cache est une paroi au moins approximativement hémisphérique (3) dont le cercle de base constitue ladite ouverture (5), et dans lequel ledit axe de rotation (6) s'étend suivant un diamètre dudit cercle de base.

3. Appareil selon la revendication 1 ou 2, dans lequel ledit axe de rotation (6) est sensiblement vertical.

4. Appareil selon la revendication 1 ou 2, dans lequel l'appareil comporte un socle (1) et le cache est monté dans l'appareil en sorte que le plan de ladite ouverture (5) soit sensiblement vertical lorsque le socle est posé.

5. Appareil selon la revendication 2 ou 3, dans lequel ledit cache (3) est mobile à rotation autour dudit axe (6).

6. Appareil selon l'une des revendications 1 à 5, caractérisé en ce que la pièce (4 ; 13) représente la lune.

7. Appareil selon la revendication 1, cet appareil comportant un socle (1) à poser qui contient un mécanisme (2,7) apte à entraîner en rotation un arbre vertical (8) qui sort du socle vers le haut et qui porte un cache hémisphérique creux (3) disposé en sorte que l'axe de rotation (6) défini par l'arbre vertical passe sensiblement par le centre du cercle d'ouverture (5) de l'hémisphère, tandis qu'un cercle ou une sphère représentant la surface lunaire est fixé sur le socle de façon à être concentrique au cercle d'ouverture.

8. Appareil selon la revendication 7, dans lequel le socle (1) contient également le mécanisme (18) d'une pendule indiquant les jours lunaires.

9. Appareil selon la revendication 1, dans lequel la paroi opaque du cache est une paroi au moins approximativement hémisphérique dont le cercle de base constitue ladite ouverture (5′), et dans lequel la pièce (4′) est mobile à rotation autour d'un axe (9) qui traverse le plan de ladite ouverture.

10. Appareil selon la revendication 9, dans lequel l'axe de rotation (9) de la pièce (4′) traverse le plan de ladite ouverture (5′) en faisant avec ce plan un angle (L) correspondant à la latitude d'un lieu d'observation.

11. Appareil selon la revendication 9 ou 10, dans lequel l'appareil comporte un socle et le cache (3′) est monté dans l'appareil en sorte que le plan de ladite ouverture (5′) soit sensiblement horizontal lorsque le socle est posé.

12. Appareil selon l'une des revendications 9 à 11, dans lequel la pièce (4′) représente la voute céleste.

13. Appareil selon la revendication 1, dans lequel ladite paroi opaque est une paroi tubulaire (10) et dans lequel ladite ouverture est située dans le plan d'une section droite transversale (15) de la paroi tubulaire.

14. Appareil selon la revendication 13, dans lequel ladite paroi opaque est une paroi tubulaire cylindrique (10).

15. Appareil selon la revendication 13 ou 14, dans lequel ladite paroi tubulaire )10) est munie à une extrémité d'un moyen (12) d'observation de ladite pièce par l'intérieur du tube.

16. Appareil selon la revendication 13 ou 14, dans lequel ladite paroi tubulaire est munie à une extrémité d'un cache hémisphérique (11).

17. Appareil selon l'une des revendications 13 à 16, dans lequel ladite pièce (13) porte une représentation de la lune et est montée à rotation autour d'un axe (13) situé dans le plan de l'ouverture de la paroi tubulaire.

18. Appareil selon l'une des revendications 13 à 16, dans lequel ladite pièce (13) a au moins approximativement la forme d'une sphère qui porte une représentation de la voute céleste et qui est montée à rotation autour d'un axe (14) qui passe par le centre de la sphère et qui s'étend obliquement par rapport au plan (15) de l'ouverture de la paroi tubulaire (10).

19. Appareil selon la revendication 18, dans lequel ladite pièce (13) est une pièce gonflable et ladite paroi tubulaire comporte alors un écran transversal (17) contre lequel ladite pièce peut s'aplatir plus ou moins lorsqu'elle est gonflée.

20. Appareil selon la revendication 1, dans lequel ladite paroi opaque est une paroi plane (3′).

**Claims**

1. Apparatus for reproducing the view or the apparent movement of at least one star, this apparatus comprising an element (4; 4'; 13) representing the said star and a cover (3; 3'; 10) having an opaque wall, characterized in that the said opaque wall has an opening (5; 5') at least approximately in the shape of a circle, and in that the element is at least approximately in the shape of a disc or a sphere suitable for filling the said opening and centred on the centre of the said opening, at least the element or the cover being rotatable about an axis (6; 9; 14) which passes through the centre of the opening and which extends along a diameter of the element.

2. Apparatus according to Claim 1, in which the opaque wall of the cover is an at least approximately hemispherical wall (3) whereof the base circle forms the said opening (5), and in which the said axis (6) of rotation extends along a diameter of the said base circle.

3. Apparatus according to Claim 1 or 2, in which the said axis (6) of rotation is substantially vertical.

4. Apparatus according to Claim 1 or 2, in which the apparatus has a plinth (1) and the cover is mounted in the apparatus such that the plane of the said opening (5) is substantially vertical when the plinth is laid down.

5. Apparatus according to Claim 2 or 3, in which the said cover (3) is rotatable about the said axis (6).

6. Apparatus according to one of Claims 1 to 5, characterized in that the element (4; 13) represents the moon.

7. Apparatus according to Claim 1, this apparatus having a plinth (1) which is to be laid down and which contains a mechanism (2, 7) suitable for driving in rotation a vertical shaft (8) which emerges upwards from the plinth and which carries a hemispherical hollow cover (3) arranged such that the axis (6) of rotation defined by the vertical shaft passes substantially through the centre of the opening circle (5) of the hemisphere, while a circle or a sphere representing the surface of the moon is fixed on the plinth so as to be concentric with the opening circle.

8. Apparatus according to Claim 7, in which the plinth (1) also contains the mechanism (18) of a clock indicating the lunar days.

9. Apparatus according to Claim 1, in which the opaque wall of the cover is an at least approximately hemispherical wall whereof the base circle forms the said opening (5'), and in which the element (4') is rotatable about an axis (9) which passes through the plane of the said opening.

10. Apparatus according to Claim 9, in which the axis (9) of rotation of the element (4') passes through the plane of the said opening (5'), forming with this plane an angle (L) corresponding to the latitude of an observation point.

11. Apparatus according to Claim 9 or 10, in which the apparatus has a plinth and the cover (3') is mounted in the apparatus such that the plane of the said opening (5') is substantially horizontal when the plinth is laid down.

12. Apparatus according to one of Claims 9 to 11, in which the element (4') represents the sky.

13. Apparatus according to Claim 1, in which the said opaque wall is a tubular wall (10), and in which the said opening is located in the plane of a cross-section (15) of the tubular wall.

14. Apparatus according to Claim 13, in which the said opaque wall is a cylindrical tubular wall (10).

15. Apparatus according to Claim 13 or 14, in which the said tubular wall (10) is equipped at one end with a means (12) of observing the said element through the inside of the tube.

16. Apparatus according to Claim 13 or 14, in which the said tubular wall is equipped at one end with a hemispherical cover (11).

17. Apparatus according to one of Claims 13 to 16, in which the said element (13) carries a representation of the moon and is mounted to be rotatable about an axis (13) located in the plane of the opening of the tubular wall.

18. Apparatus according to one of Claims 13 to 16, in which the said element (13) is at least approximately in the shape of a sphere which carries a representation of the sky and which is mounted to be rotatable about an axis (14) passing through the centre of the sphere and extending obliquely with respect to the plane (15) of the opening of the tubular wall (10).

19. Apparatus according to Claim 18, in which the said element (13) is an inflatable element and the said tubular wall then has a transverse screen (17) against which the said element may be more or less flattened when it is inflated.

20. Apparatus according to Claim 1, in which the said opaque wall is a planar wall (3').

**Patentansprüche**

1. Gerät zur Nachbildung der augenscheinlichen Sicht oder Bewegung mindestens eines Sterns mit einem Stück (4; 4'; 13), welches den genannten Stern repräsentiert, und einer Hülle (3; 3'; 10), welcher eine opake Wand aufweist, dadurch **gekennzeichnet,** daß die besagte opake Wand eine mindestens angenäherte kreisförmige Öffnung (5; 5') aufweist und daß das Stück mindestens angenähert Scheiben- oder Kugelform hat, welche die genannte Öffnung ausfüllen kann und auf die Mitte der genannten Öffnung zentriert ist, wobei mindestens das Stück oder die Hülle um eine Achse (6; 9; 14) rotationsbeweglich ist, welche durch die Mitte der Öffnung und längs eines Durchmessers des Stückes verläuft.

2. Gerät nach Anspruch 1, bei dem die opake Wand der Hülle mindestens angenähert eine Halbkugel (3) ist, deren Grundkreis die genannte Öffnung (5) bildet, und bei der die besagte Rotationsachse (6) sich längs eines Durchmessers des Grundkreises erstreckt.

3. Gerät nach Anspruch 1 oder 2, bei dem die besagte Rotationsachse (6) vertikal verläuft.

4. Gerät nach Anspruch 1 oder 2, bei dem das Gerät einen Sockel 1 aufweist und die Hülle derart am Gerät montiert ist, daß die Ebene der genannten Öffnung im wesentlichen vertikal verläuft, wenn der Sockel aufgestellt ist.

5. Gerät nach Anspruch 2 oder 3, bei dem die besagte Hülle (3) um die besagte Achse (6) rotationsbeweglich ist.

6. Gerät nach einem der Ansprüche 1 bis 5, dadurch **gekennzeichnet,** daß das Stück (4; 13) den Mond repräsentiert.

7. Gerät nach Anspruch 1, dadurch **gekennzeichnet,** daß es einen aufzustellenden Sockel (1) aufweist, welcher einen Mechanismus (2, 7) zum Antreiben einer Vertikalwelle (8) aufweist, die aus dem Sockel nach oben vorsteht und eine Hülle in Form einer hohlen Halbkugel (3) trägt, die derart angeordnet ist, daß die Rotationsachse (6), welche durch die vertikale Welle definiert ist, durch die Mitte des Öffnungskreises (5) der Halbkugel läuft, während ein Kreis oder eine Kugel, welche die Mondoberfläche repräsentiert, auf dem Sockel konzentrisch mit dem Öffnungskreis fixiert ist.

8. Gerät nach Anspruch 7, bei dem der Sockel (1) außer dem Mechanismus (18) eine die Mondtage anzeigende Pendeluhr enthält.

9. Gerät nach Anspruch 1, bei dem die opake Wand der Hülle mindestens angenähert die Wand einer Halbkugel ist, deren Grundkreis die genannte Öffnung (5') bildet, und bei dem das Stück (4') rotationsbeweglich um eine Achse (9) ist, welche die Ebene der genannten Öffnung durchsetzt.

10. Gerät nach Anspruch 9, bei der die Rotationsachse (9) des Stückes (4') die Ebene der genannten Öffnung (5') unter einem Winkel (L) durchsetzt, welcher der geographischen Breite eines Beobachtungsortes entspricht.

11. Gerät nach Anspruch 9 oder 10, bei welcher das Gerät einen Sockel aufweist und die Hülle (3') im Gerät derart montiert ist, daß die Ebene der genannten Öffnung (5') im wesentlichen horizontal verläuft, wenn der Sockel aufgestellt ist.

12. Gerät nach einem der Ansprüche 9 bis 11, bei dem das Stück (4') das Himmelsgewölbe repräsentiert.

13. Gerät nach Anspruch 1, bei dem die genannte opake Wand eine rohrförmige Wand (10) ist, bei der die genannte Öffnung in der Ebene eines transversalen Querschnittes (15) der rohrförmigen Wand gelegen ist.

14. Gerät nach Anspruch 13, bei dem die genannte opake Wand eine zylindrische rohrförmige Wand (10) ist.

15. Gerät nach Anspruch 13 oder 14, bei dem die genannte rohrförmige Wand (10) an einem Ende mit einer Beobachtungsvorrichtung (12) des genannten Stückes durch das Innere des Rohres versehen ist.

16. Gerät nach Anspruch 13 oder 14, bei dem die genannte rohrförmige Wand an einem Ende mit einer halbkugelförmigen Hülle (11) versehen ist.

17. Gerät nach einem der Ansprüche 13 bis 16, bei dem das genannte Stück (13) den Mond repräsentiert und zur Rotation um eine Achse angeordnet ist, die in der Ebene der Öffnung der rohrförmigen Wand liegt.

18. Gerät nach einem der Ansprüche 13 bis 16, bei dem das genannte Stück (13) mindestens angenähert die Form einer Kugel aufweist, welche das Himmelsgewölbe repräsentiert und zur Rotation um eine Achse (14) montiert ist, welche durch die Mitte der Kugel und schief bezüglich der Ebene (15) der Öffnung der rohrförmigen Wand (10) verläuft.

19. Gerät nach Anspruch 18, bei dem das genannte Stück (13) aufblasbar ist und die genannte rohrförmige Wand mindestens einen transversalen Schirm trägt, an den sich das genannte Stück im aufgeblasenen Zustand abflachend anlegen kann.

20. Gerät nach Anspruch 1, bei dem die genannte opake Wand eine ebene Wand (3') ist.

FIG. 1

FIG. 2

FIG. 3

FIG. 4